(19) **Europäisches Patentamt / European Patent Office / Office européen des brevets**

(11) **EP 1 876 541 A1**

(12) **EUROPEAN PATENT APPLICATION**
published in accordance with Art. 153(4) EPC

(43) Date of publication:
**09.01.2008 Bulletin 2008/02**

(21) Application number: **06732231.3**

(22) Date of filing: **21.04.2006**

(51) Int Cl.:
***G06F 17/30*** (2006.01)

(86) International application number:
**PCT/JP2006/308473**

(87) International publication number:
**WO 2006/115227 (02.11.2006 Gazette 2006/44)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.04.2005 JP 2005124325**

(71) Applicant: **Intellectual Property Bank Corp.**
**Tokyo 105-0001 (JP)**

(72) Inventors:
• **MASUYAMA, Hiroaki**
**Toyonaka-shi,**
**Osaka 560-0054 (JP)**

• **SATO, Haru-tada,**
**c/o Intellectual Pty Bank Corp.**
**Tokyo 105-0001 (JP)**

(74) Representative: **Style, Kelda Camilla Karen et al**
**Page White & Farrer**
**Bedford House**
**John Street**
**London, WC1N 2BF (GB)**

(54) **DEVICE FOR EXTRACTING INDEX WORD IN DOCUMENT TO BE EXAMINED**

(57) A device comprises input means (1) for inputting a document (d) to be examined, a group of documents (P) to be compared, and a group of similar documents (S), index word extracting means (120) for extracting an index word in the document (d), first frequency calculating means (143) for calculating In GFIDF(P) of the extracted index word in the document group (P), second frequency calculating means (171) for calculating In GFIDF(S) of the extracted index word in the similar document group (S), and output means (4) for outputting the index words and their positioning data according to the combination of the calculated In GFIDF(P) and In GFIDF (S) in the document group to be compared and the similar document group. With this, when a document to be examined is given, the assertion of the document can be easily grasped.

FIG. 2

EP 1 876 541 A1

## Description

<u>TECHNICAL FIELD</u>

The present invention relates to extraction of index terms in a document-to-be-surveyed, and in particular, to an automatic index term extraction device, extraction program and extraction method that facilitates proper analysis of assertion of the document-to-be-surveyed.

<u>BACKGROUND ART</u>

The amount of technical documents and other documents such as patent documents has been steadily increasing year after year. Patent applications with tens of claims are not rare, and it requires an immense amount of effort to conduct a survey covering such a large amount of documents. In recent years, ever since document data has become distributed electronically, a system for automatically retrieving only the documents similar to a document-to-be-surveyed from the vast amounts of documents has been put into practical application. For example, Japanese Patent Laid-Open Publication H11-73415 "Device and Method for Retrieving Similar Document" (Patent Document 1) compares the index terms contained in the document-to-be surveyed with those contained in other documents, calculates the similarity based on types of similar index terms and frequencies at which they appear, and outputs the documents in the order of similarity, from the one having the highest similarity.

Nevertheless, although similar documents can be retrieved, it is not possible to understand what is asserted in such a document-to-be-surveyed. In order to understand what is asserted in the document-to-be-surveyed, it is necessary to read through and then evaluate it.

Meanwhile, as a method of automatically extracting the characteristics of a document themselves, for instance, there is Japanese Patent Laid-Open Publication No. H11-345239 "Method and Device for Extracting Document Information and Storage Medium Stored with Document Information Extraction Program" (Patent Document 2). In this publication, an "object document set" is extracted by retrieval from a "standard document set", and characteristic information is extracted from each "individual document" comprising the "object document set".

Specifically, "overall characteristics of the object document set" which characterize the "object document set" against the "standard document set" are calculated, and "individual document characteristics" which characterize each "individual document" in the "object document set" against other individual documents are calculated. The characteristic information of each "individual document" is output based on the "overall characteristics of the object document set" and "individual document characteristics". This technology is advantageous in that it facilitates a user to find useful information and sort it out from vast amount of information.

[Patent Document 1] Japanese Patent Laid-Open Publication H11-73415 "Device and Method for Retrieving Similar Document"

[Patent Document 2] Japanese Patent Laid-Open Publication No. H11-345239 "Method and Device for Extracting Document Information, and Storage Medium Stored with Document Information Extraction Program"

<u>DISCLOSURE OF THE INVENTION</u>

[Problems to be solved by the invention]

Nevertheless, in the technology described in Japanese Patent Laid-Open Publication No. H11-345239 (Patent Document 2) a specific theme, for instance "cherry blossom viewing", is foremost decided, and an "object document set" matching therewith is extracted. It is only after the "object document set" has been extracted can each "individual document", from which characteristic information is extracted, be determined. In other words, if the "object document set" or a specific theme for extracting such object document set has not been decided in advance, even "individual documents" cannot be determined. Therefore, when a specific document-to-be-surveyed is given, the technology described in this publication is not able to analyze what is asserted in it.

Furthermore, although the characteristic information of the "individual document" is output, sufficient information may not be obtained if the "individual document" itself lacks such characteristics, preventing comprehension of what the document is intended to assert.

Thus, an object of the present invention is to provide an index term extraction device that facilitates understanding of what is asserted in a document-to-be-surveyed when it is given the document.

[Means for solving problem]

(1) In order to achieve the object described above, the index term extraction device according to the present invention includes: input means for inputting a document-to-be-surveyed, documents-to-be-compared that are compared with the document-to-be-surveyed, and similar documents that are similar to the document-to-be-surveyed; index term extraction means for extracting index terms from the document-to-be-surveyed; first appearance frequency calculation means for calculating a function value of an appearance frequency of each of the extracted index terms in the documents-to-be-compared; second appearance frequency calculation means for calculating a function value of an appearance frequency of each of the extracted index terms in the similar documents; and output means for outputting each index term and its positioning data based on the combination of the function value of the appearance frequency in the documents-to-be-compared and the function value of the appearance frequency in the similar documents, respectively calculated for each index term. At least one of the function value of the appearance frequency in the documents-to-be-compared calculated by the first appearance frequency calculation means and the function value of the appearance frequency in the similar documents calculated by the second appearance frequency calculation means has a global frequency IDF as its variable.

The global frequency IDF is a value calculated by dividing a global frequency of a given index term in a given set of documents by its document frequency in such a set of document. In other words, it indicates an average number of times of using a given index term per document in which the given index term is used. Using this global frequency IDF allows understanding of what is asserted in the document-to-be-surveyed.

According to the present invention, since the processing of extracting the index terms from the document-to-be-surveyed, processing for calculating the function value of the appearance frequency in the documents-to-be-compared or similar documents and so on are all performed with a computer, a person will not have to read the contents of documents at all in order to perform the foregoing processing.

Although the documents-to-be-compared need to be electronically retrievable data, there is no other limitation on the contents thereof and, the documents can be randomly extracted or fully extracted under certain conditions from a certain document group. In a typical example, all patent documents (unexamined patent publications and so on) in a certain country during a certain period will be the documents-to-be-compared.

The similar documents also need to be electronically retrievable data. There is no particular limitation for selecting method of the similar documents and they may be selected based on the concurrence of classification such as IPC (International Patent Classification).

In the present invention, a single document or a plurality of documents may be surveyed. When a plurality of documents are subject to be surveyed in a bundle, common assertion of the document group will be represented rather than each assertion of the individual documents-to-be-surveyed. Further, a document-to-be-surveyed may or may not be included in the documents-to-be-compared or the similar documents.

Extraction of the index terms by the index term extraction means is conducted by clipping words from the whole or a part of the document. There is no other limitation on the method of clipping the words, and, for instance, a method of extracting significant nouns excluding particles and conjunctions via conventional methods or with commercially available morphological analysis software, or a method of retaining an index term dictionary (thesaurus) database in advance and using index terms that can be obtained from such database may be adopted.

As the appearance frequency in the document group of the index term, for instance, the number of document hits (document frequency; DF) when retrieving a certain index term among the document group is used, but this is not limited thereto, and, for example, the total number of hits of the index term may also be used.

Output of the index terms by the output means may be the output of all index terms extracted by the index term extraction means, or the output of only a portion of the index terms that strongly show the character of the document. Further, the positioning data to be output together with the index terms from the output means may be output as the function value of the appearance frequency in the documents-to-be-compared and in the similar documents as is, or output as a diagram which disposes the index terms on a coordinate system based thereon, or output as a list of index terms classified into groups based on the function value of the appearance frequency described above.

(2) In the foregoing index term extraction device, it is preferred that the input means calculates, with respect to the document-to-be-surveyed and each document of source-documents-for-selection from which the similar documents are selected, a vector having as its component a function value of an appearance frequency in each document of each index term contained in each document, or a function value of an appearance frequency in the source-documents-for-selection of each index term contained in each document, and selects the documents with a vector of a higher degree of similarity to the vector calculated for the document-to-be-surveyed from the source-documents-for-selection, and inputs the selected documents as the similar documents.

Since the similar documents are selected based on the vector of each document, it is possible to secure high reliability. Further, for instance, unlike when the similar documents are selected based on IPC (International Patent Classification) match or alike, the number of documents to be selected in the order of similarity from the highest can be specified at one's disposal.

Determination on the degree of similarity between the vectors may employ the function of the product between vector components such as cosine or Tanimoto correlation (similarity) between the vectors, or the function of the difference between vector components such as distance (non-similarity) between the vectors.

It is preferable to use the documents-to-be-compared as the source-documents-for-selection.

(3) In each of the foregoing index term extraction devices, it is preferred that the output means arranges and outputs each index term by taking the function value of the appearance frequency in the documents-to-be-compared as a first axis of a coordinate system, and taking the function value of the appearance frequency in the similar documents as a second axis of the coordinate system.

Two dimensional representation of each index term on the coordinate system facilitates visual comprehension of what is asserted in a document.

For instance, a planar orthogonal coordinate system may be used as the coordinate system, and an X axis (horizontal axis) is used as the first axis and a Y axis (vertical axis) is used as the second axis. Nevertheless, without limitation to the above, a three-dimensional coordinate system may also be used and an index other than the above may take the Z axis.

(4) In each of the foregoing index term extraction devices, it is preferred that both of the function value of the appearance frequency in the documents-to-be-compared calculated by the first appearance frequency calculation means and the function value of the appearance frequency in the similar documents calculated by the second appearance frequency calculation means have the global frequency IDF as a variable.

In this manner, an index term can be removed as a noise when the calculation results from the first and second appearance frequency calculation means are widely dispersed, and further facilitating the comprehension of what is asserted in the document.

(5) In each of the foregoing index term extraction devices, the function value having a global frequency IDF as its variable is preferably a logarithm of such global frequency IDF.

It helps to balance out a tendency where the larger the value of the global frequency IDF is, the greater the variance will be, and further facilitating understanding of what is asserted.

(6) In each of the foregoing index term extraction devices, the function value having the global frequency IDF as its variable is preferably a function value having a ratio or difference between the global frequency IDF and the term frequency in the document-to-be-surveyed as a variable.

In this manner, the strength of assertion in the document-to-be-surveyed itself is taken into consideration, thus facilitating understanding of what is asserted.

(7) (8) The present invention also includes an extraction method comprising the same steps executed by the respective devices described above, as well as an extraction program allowing a computer to perform the same process executed by the respective devices described above. Such a program may be recorded in a recording medium such as a FD, CDROM or DVD, or be transmitted and received via network.

[Effect of the invention]

According to the present invention, it is possible to provide an index term extraction device that facilitates understanding of what is asserted in a document-to-be-surveyed when the device is given the document.

BRIEF DESCRIPTION OF THE DRAWINGS

FIG. 1 is a diagram showing a hardware configuration of an index term extraction device according to an embodiment of the present invention;

FIG. 2 is a diagram for explaining the details of the configuration and function of the index term extraction device;

FIG. 3 is a flowchart showing the operation of condition setting in the input device 2;

FIG. 4 is a flowchart showing the operation of a processing device 1;

FIG. 5 is a flowchart showing the output operation of the map, in the output device 4;

FIG. 6 is a diagram showing an example of a map output from the index term extraction device of a first embodiment;

FIG. 7 is a diagram showing another example of a map output from the index term extraction device of the first embodiment;

FIG. 8 is a diagram showing an example of a map output from the index term extraction device of a second embodiment;

FIG. 9 is a diagram showing another example of a map output from the index term extraction device of the second embodiment;

FIG. 10 is a diagram showing an example of a map output from the index term extraction device of a third embodiment;

FIG. 11 is a diagram showing another example of a map output from the index term extraction device of the third embodiment;

FIG. 12 is a diagram showing an example of a map output from the index term extraction device of a fourth embodiment;

FIG. 13 is a diagram showing another example of a map output from the index term extraction device of the fourth embodiment;

FIG. 14 is a diagram showing an example of a map output from the index term extraction device of a fifth embodiment; and

FIG. 15 is a diagram showing another example of a map output from the index term extraction device of the fifth embodiment.

DESCRIPTION OF REFERENCE MARKS

1 processing device
2 input device
3 recording device
4 output device
120 index term (d) extraction unit
121 TF(d) calculation unit (term frequency calculation means)
143 GFIDF(P) and others calculation unit (first appearance frequency calculation means)
150 similarity calculation unit
160 similar documents S selection unit
171 GFIDF(S) and other calculation unit (second appearance frequency calculation means)
180 characteristic index term extraction unit

BEST MODES FOR CARRYING OUT THE INVENTION

Referring to the figures, embodiments of the invention are now explained in details.

<1. Explanation of Vocabulary, etc.>

The vocabulary used in this.Description is now defined or explained.

Document-to-be-surveyed d: A document(s) that is the subject of the survey. For example, this may be a document or a set of documents comprising patent publications.

Documents-to-be-compared P: A set of documents that are compared with the document-to-be-surveyed d. For instance, it may be all the patent documents (such as unexamined patent publications) that belong to a certain country and a certain period of time, or a set of documents randomly extracted therefrom. In the explanations below, the document-to-be-surveyed d is included in the documents-to-be-compared P; however, it does not necessarily have to be included therein.

Similar documents S: A set of documents that is similar to the document-to-be-surveyed d. In the explanations below, the document-to-be-surveyed d is included in the similar documents S; however, it does not necessarily have to be included therein. Furthermore, in the explanations below, the similar documents are selected from the documents-to-be-compared P; however, they may be selected from a separate source-documents-for-selection.

Symbols d or (d), P or (P) and S or (S) assigned to the structural elements in the figures denote to the document-to-be-surveyed, the documents-to-be-compared and the similar documents, respectively. These symbols are also assigned hereinafter to the structural elements or operations for easy differentiation. For example, an "index term (d)" refers to an index term included in the document-to-be-surveyed d.

In order to simplify the explanations below, abbreviations are herein defined.

$w_i$: An index term included in the document-to-be-surveyed d
p: Each document belonging to the documents-to-be-compared P
N: Total number of documents included in the documents-to-be-compared P
N': Number of documents included in the similar documents S

TF(d): Frequency (Term Frequency) at which the index term $w_i$ belonging to d appeared in d

TF(P): Frequency (Term Frequency) at which an index term belonging to p appeared in p

DF(P): Document frequency at which the index term belonging to d or p appeared in P. The document frequency is defined as a number of document hits found by retrieving documents using a specific index term from a plurality of documents.

DF(S) : Document frequency at which the index term $w_i$ belonging to d appeared in S

IDF(P): Logarithm of [Inverse DF(P) $\times$ number of documents]: $\ln[N/DF(P)]$

IDF(S): Logarithm of [Inverse DF(S) $\times$ number of documents]: $\ln[N'/DF(S)]$

TFIDF: Product of TF and IDF. This is calculated for each index term in a document.

GF(P): Total sum (Global Frequency) of the term frequency TF(p) in every document p belonging to the documents-to-be-compared P: $\Sigma_{p\in P}$ TF (p)

GF(S): Total sum (Global Frequency) of the term frequency TF(s) in every document s belonging to the similar documents S: $\Sigma_{s\in S}$ TF(s)

GFIDF(P) or GFIDF($w_i$;P): Global Frequency IDF of the index term $w_i$ belonging to d appeared in P: GF(P)/DF(P)

GFIDF(S) or GFIDF($w_i$;S): Global Frequency IDF of the index term $w_i$ belonging to d appeared in S: GF(S)/DF(S)

Similarity (similarity ratio): Degree of similarity between the document-to-be-surveyed d and a document p belonging to the documents-to-be-compared P

An index term herein means a word(s) that is taken out from the whole or a part of a document. Words may be taken out from the document using a conventional method or commercially available morphological analysis software, which extracts meaningful nouns by removing particles and conjunctions, or alternatively, an index term dictionary (thesaurus) database may be created in advance, and index terms obtained therefrom may be used.

Further, although a natural logarithm is used herein as the logarithm, a common logarithm or alike may also be used.

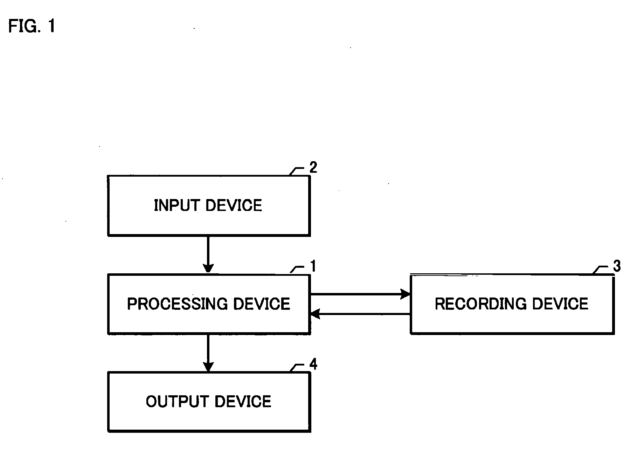

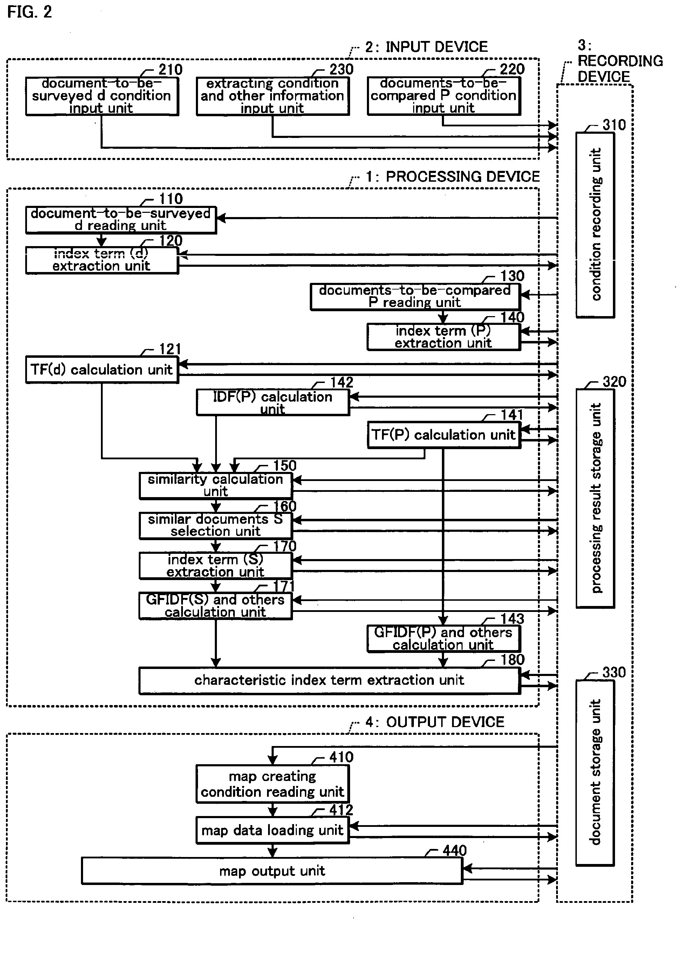

<2. Structure of Index Term Extraction Device: FIG. 1, FIG. 2>

FIG. 1 is a diagram showing a hardware configuration of an index term extraction device according to an embodiment of the present invention.

As shown in FIG. 1, the index term extraction device according to this embodiment includes a processing device 1 having a CPU (Central Processing Unit), a memory (recording device), etc., an input device 2 which comprises an input means such as a keyboard (manual input unit), a recording device 3 which comprises a recording means for storing conditions, document data, or processing results by the processing device 1, and an output device 4 which comprises an output means for displaying the resultant extracted index terms, etc., in a form of a map.

FIG. 2 is a diagram for explaining the details of the configuration and function of the index term extraction device.

The processing device 1 includes a document-to-be-surveyed d reading unit 110, an index term (d) extraction unit 120, a TF(d) calculation unit 121, a documents-to-be-compared P reading unit 130, an index term (P) extraction unit 140, a TF(P) calculation unit 141, an IDF(P) calculation unit 142, a GFIDF(P) and others calculation unit 143, a similarity calculation unit 150, a similar documents S selection unit 160, an index term (S) extraction unit 170, a GFIDF (S) and others calculation unit 171, a characteristic index term extraction unit 180, and so on.

The input device 2 includes a document-to-be-surveyed d condition input unit 210, a documents-to-be-compared P condition input unit 220, an extracting condition and other information input unit 230, and so on.

The recording device 3 includes a condition recording unit 310, a processing result storage unit 320, a document storage unit 330, and so on. The document storage unit 330 includes an external database and an internal database. An external database, for instance, refers to a document database such as IPDL (Industrial Property Digital Library) provided by the Japanese Patent Office, and PATOLIS provided by PATOLIS Corporation. An internal database refers to a database personally storing commercially available data such as a patent JP-ROM, a device for reading documents stored in a medium such as a FD (Flexible Disk), CDROM (Compact Disk), MO (Optical-magnetic Disk), and DVD (Digital Video Disk), an OCR (Optical Character Reader) device for reading documents output on paper or handwritten documents, and a device for converting the read data into electronic data such as text.

The output device 4 includes a map creating condition reading unit 410, a map data loading unit 412, a map output unit 440, and so on.

In FIG. 1 and FIG. 2, the communication means for exchanging signals and data among the processing device 1, input device 2, recording device 3 and output device 4 may be realized through directly connecting via a USB (Universal Serial Bus) cable or the like, performing the transmission and reception via network such as a LAN (Local Area Network), or communicating via a medium storing documents such as a FD, CDROM, MO or DVD. A combination of a part or several of these may also be adopted.

Next, referring to FIG. 2, the functions of the index term extraction device according to one embodiment of the present invention is explained in details.

<2-1. Details of Input Device 2>

In the input device 2 of FIG. 2, the document-to-be-surveyed d condition input unit 210 allows conditions for reading the document-to-be-surveyed d to be set using an input screen or similar device. The documents-to-be-compared P condition input unit 220 allows the conditions for reading the documents-to-be-compared P to be set using an input screen or a similar device. The extracting condition and other information input unit 230 allows conditions for extracting index terms from the document-to-be-surveyed d and the documents-to-be-compared P, conditions for calculating TF, IDF, similarity and GFIDF, conditions for selecting similar documents and creating a map and so on to be set using an input screen or a similar device. These input conditions are sent to and stored in the condition recording unit 310 in the recording device 3.

<2-2. Details of Processing Device 1>

In the processing device 1 of FIG. 2, the document-to-be-surveyed d reading unit 110 reads the document-to-be-surveyed from the document storage unit 330 based on the conditions in the condition recording unit 310. Then, the read document-to-be-surveyed d is sent to the index term (d) extraction unit 120. The index term (d) extraction unit 120 extracts the index terms from the document obtained via the document-to-be-surveyed d reading unit 110 based on the conditions in the condition recording unit 310, and stores the extracted index terms in the processing result storage unit 320.

The documents-to-be-compared P reading unit 130 reads the plurality of documents to be compared from the document storage unit 330 based on the conditions in the condition recording unit 310. Then, the read documents-to-be-compared P are sent to the index term (P) extraction unit 140. The index term (P) extraction unit 140 extracts the index terms from the documents obtained via the documents-to-be-compared P reading unit 130 based on the conditions in the condition recording unit 310, and stores the extracted index terms in the processing result storage unit 320.

The TF(d) calculation unit 121 calculates TF from the result obtained by the index term (d) extraction unit 120 processing the document-to-be-surveyed d and stored in the processing result storage unit 320, based on the conditions in the condition recording unit 310. The obtained TF(d) data is stored in the processing result storage unit 320, or sent directly to the similarity calculation unit 150.

The TF(P) calculation unit 141 calculates TF from the result obtained by the index term (P) extraction unit 140 processing the documents-to-be-compared P and stored in the processing result storage unit 320, based on the conditions in the condition recording unit 310. The obtained TF(P) data is stored in the processing result storage unit 320 or sent directly to the similarity calculation unit 150.

The IDF(P) calculation unit 142 calculates IDF from the processing result obtained by the index term (P) extraction unit 140 for the documents-to-be-compared P and stored in the processing result storage unit 320, based on the conditions in the condition recording unit 310. The obtained IDF(P) data is stored in the processing result storage unit 320, or sent directly to the similarity calculation unit 150 or sent directly to the characteristic index term extraction unit 180.

The similarity calculation unit 150 obtains, based on the conditions in the condition recording unit 310, the processing results by the TF(d) calculation unit 121, TF(P) calculation unit 141 and IDF(P) calculation unit 142 directly therefrom or from the processing result storage unit 320, and calculates the similarity between each document in the documents-to-be-compared P and the document-to-be-surveyed d. The obtained similarity is attached to the respective document in the documents-to-be-compared P as similarity data, and sent to the processing result storage unit 320 or sent directly to the similar documents S selection unit 160.

The similarity calculation by the similarity calculation unit 150 is performed through calculation via TFIDF calculation or the like for each index term of each document, and the similarity of each document of the documents-to-be-compared P in relation to the document-to-be-surveyed d is thereby calculated. TFIDF calculation is the product of the TF calculation result and the IDF calculation result. The calculation method of similarity will be described later in detail.

The similar documents S selection unit 160 obtains the result of similarity calculation for the documents-to-be-compared P from the processing result storage unit 320 or directly from the similarity calculation unit 150, and selects the similar documents S based on the conditions in the condition recording unit 310. The similar documents S are selected, for instance, by sorting the documents in the order of similarity from the highest, and selecting the required number of documents specified in the conditions. The selected similar documents S are output to the processing result storage unit 320 or directly to the index term (S) extraction unit 170.

The index term (S) extraction unit 170 obtains the input data of the similar documents S from the processing result storage unit 320 or directly from the similar documents S selection unit 160, and extracts the index terms (S) from the similar documents S based on the conditions in the condition recording unit 310. The extracted index terms (S) are sent to the processing result storage unit 320 or directly to the GFIDF(S) and others calculation unit 171.

The GFIDF(S) and others calculation unit 171 obtains the index terms (S) from the processing result storage unit 320 or directly from the index term (S) extraction unit 170, and calculates GFIDF or others of the index terms (S) based on the conditions in the condition recording unit 310. The GFIDF(S) and others calculation unit 171 calculates GFIDF and others, including In GFIDF(S), IDF(S), GFIDF(S)/TF(d) and GFIDF(S)-TF(d), as will be described in the embodiments below. The obtained GFIDF(S) and others are stored in the processing result storage unit 320 or sent directly to the characteristic index term extraction unit 180.

The GFIDF(P) and others calculation unit 143 obtains the index terms (P) from the processing result storage unit 320 or directly from the index term (P) extraction unit 140, and calculates GFIDF and others of the index terms (P) based on the conditions in the condition recording unit 310. The GFIDF(P) and others calculation unit 143 calculates GFIDF and others, including In GFIDF(P), IDF(P), GFIDF(P)/TF(d) and GFIDF(P)-TF(d), as will be described in the embodiments below. The obtained GFIDF(P) and others are stored in the processing result storage unit 320 or sent directly to the characteristic index term extraction unit 180.

The characteristic index term extraction unit 180 extracts a certain number of index terms (d) from the processing result storage unit 320 or directly from the results of the GFIDF(S) and others calculation unit 171 and of the GFIDF(P) and others calculation unit 143, with the certain number of extracting index term being required by specifications in the conditions, or being those selected by a calculation based on the conditions. The index term(s) extracted here is referred to as the "characteristic index term(s)". The extracted characteristic index terms (d) are sent to the processing result storage unit 320.

<2-3. Details of Recording Device 3>

In the recording device 3 of FIG. 2, the condition recording unit 310 records information such as the conditions received from the input device 2, and sends necessary data to the processing device 1 or the output device 4, respectively, based on their requests. The processing result storage unit 320 stores the processing results from the respective elements in the processing device 1, and sends necessary data based on the request from the processing device 1.

The document storage unit 330 stores and provides the necessary document data obtained from an external database or internal database based on the request from the input device 2 or processing device 1.

<2-4. Details of Output Device 4>

In the output device 4 of FIG. 2, the map creating condition reading unit 410 reads a map creating condition based on the conditions in the condition recording unit 310, and sends it to the map data loading unit 412.

The map data loading unit 412 loads the processing result of the characteristic index term extraction unit 180 from the processing result storage unit 320, according to the conditions received from the map creating condition reading unit 410. The loaded characteristic index term data is sent to the processing result storage unit 320 or sent directly to the map output unit 440.

The map output unit 440 obtains the conditions and data output by the map data loading unit 412 directly therefrom or from the processing result storage unit 320, and creates an area for outputting the map. Simultaneously, it also outputs the processing result of the characteristic index term extraction unit 180 so that they can be plotted on the map, printed or stored as data.

In one distinctive example of the map output by the map output unit 440, with respect to each characteristic index term in the document-to-be-surveyed d extracted by the characteristic index term extraction unit 180, the In GFIDF (P) is mapped as a horizontal axis value, and the In GFIDF(S) is mapped as a vertical axis value, and these are distributed on a two-dimensional In GFIDF(P)-In GFIDF(S) plane. Assertion in the document-to-be-surveyed.d can be inferred from such distributions of the characteristic index terms represented on the map.

<3. Operation of Index Term Extraction Device>

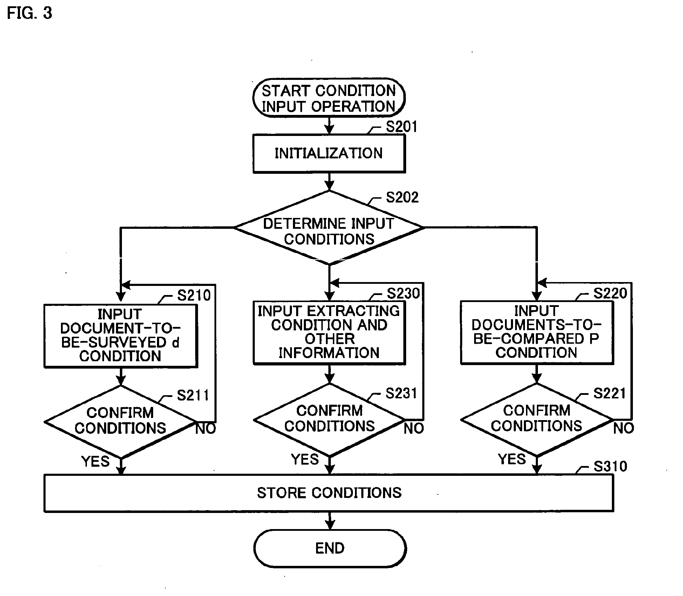

FIG. 3, FIG. 4 and FIG. 5 are diagrams for explaining the operation of the index term extraction device.

<3-1. Input Operation: FIG. 3>

FIG. 3 is a flowchart showing the operation of condition setting in the input device 2. Foremost after initialization (step S201), the input conditions are determined (step S202). When the operator selects to input the conditions of the document-to-be-surveyed d, input of conditions of the document-to-be-surveyed d is accepted at the document-to-be-surveyed d condition input unit 210 (step S210). Next, the input conditions are confirmed by the operator with a display screen (not shown), and "Set" is selected on the screen if the input conditions are correct. Thus, the input conditions are stored in the condition recording unit 310 (step S310). Since "Back" will be selected if the input conditions are incorrect, the routine returns to step S210 (step S211).

Meanwhile, when the operator selects to input the conditions of the documents-to-be-compared P at step S202, input of conditions of the documents-to-be-compared P is accepted by the documents-to-be-compared P condition input unit 220 (step S220). Next, the input conditions are confirmed by the operator with a display screen (not shown), and "Set" is selected on the screen if the input conditions are correct. Thus, the input conditions are stored in the condition recording unit 310 (step S310). Since "Back" will be selected if the input conditions are incorrect, the routine returns to step S220 (step S221).

Further, when the operator selects to input extracting conditions or other conditions at step S202, input of extracting conditions and other conditions is accepted by the extracting condition and other information input unit 230 (step S230). Next, the input conditions are confirmed by the operator with a display screen (not shown), and "Set" is selected on the screen if the input conditions are correct. Thus, the input conditions are stored in the condition recording unit 310 (step S310). Since "Back" will be selected if the input conditions are incorrect, the routine returns to step S230 (step S231). At step S230, the extracting condition of the index terms (d) and the selecting condition of the similar documents S, and the output condition of the characteristic index terms and the like are both set.

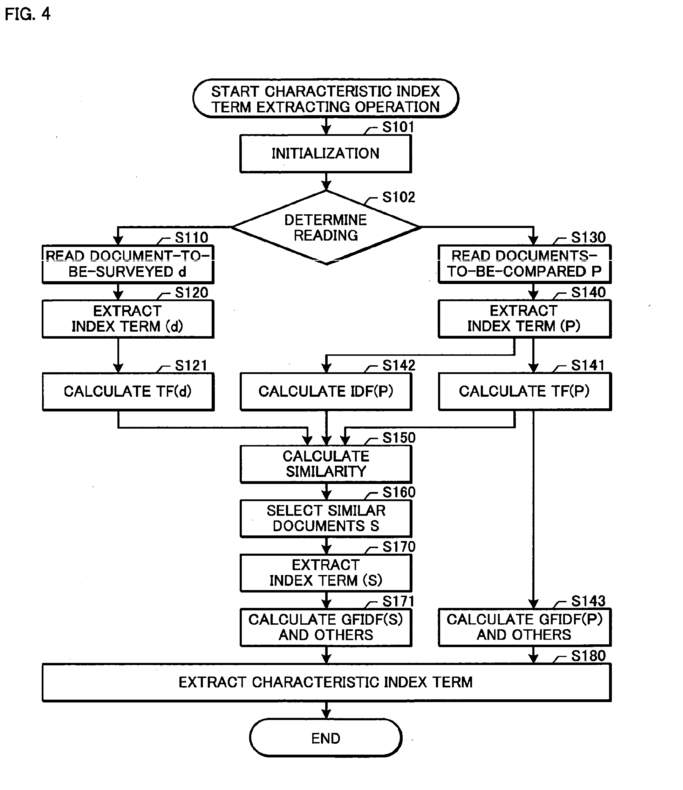

<3-2. Extracting Operation of Characteristic Index Term: FIG. 4>

FIG. 4 is a flowchart showing the operation of the processing device 1. Foremost after initialization (step S101), based on the conditions recorded in the condition recording unit 310, it is determined which document(s) is to be read from the document storage unit 330, either a document-to-be-surveyed d or documents-to-be-compared P (step S102). If it is determined that the document-to-be-surveyed d should be read, the document-to-be-surveyed d reading unit 110 reads the document-to-be-surveyed from the document storage unit 330 (step S110). Next, the index term (d) extraction unit 120 extracts the index terms from the document-to-be-surveyed d (step S120). Subsequently, the TF(d) calculation unit 121 calculates the TF for each of the extracted index term (step S121).

Meanwhile, if it is determined that the documents-to-be-compared P should be read at step S102, the documents-to-be-compared P reading unit 130 reads the documents-to-be-compared P (step S130). Next, the index term (P) extraction unit 140 extracts the index terms from the documents-to-be-compared P (step S140). Subsequently, the TF(P) calculation unit 141 calculates the TF for each of the extracted index terms (step S141), and the IDF(P). calculation unit 142 calculates the IDF thereof (step S142).

Next, the similarity calculation unit 150 calculates similarity based on the TF(d) calculation result output from the TF(d) calculation unit 121, the TF(P) calculation result output from the TF(P) calculation unit 141, and the IDF(P) calculation result output from the IDF(P) calculation unit 142 (step S150). This similarity calculation is executed by calling a similarity calculation module that calculates the similarity based on the conditions input from the input device 2, from the external recording unit 310.

A specific example of similarity calculation is as explained below. Here, assume that d is the document-to-be-surveyed, and p is a document in the documents-to-be-compared P. As a result of processing on these documents d and p, assume that the index terms clipped from document d are "red", "blue" and "yellow". Further, assume that the index terms clipped from document p will be "red" and "white". In this case, the term frequency of the index term in document d will be TF(d), the term frequency of the index term in document p will be.TF(P), and the document frequency of the index term obtained from the documents-to-be-compared P will be DF(P). Also assume that the total number of documents is 50. Here, for example, assume the following conditions:
[Table 1]

| Index term and TF(d) | red(1), blue(2), yellow(4) |
|---|---|
| Index term and TF(P) | red(2), white(1) |
| Index term and DF(P) | red(30), blue(20), yellow(45), white(13) |

The TFIDF(P) is calculated for each index term of each document in order to calculate the vector representation. The result, with respect to document vectors d and p, will be as follows:
[Table 2]

| | red | blue | yellow | White |
|---|---|---|---|---|
| d | $1 \times \ln(50/30)$ | $2 \times \ln(50/20)$ | $4 \times \ln(50/45)$ | 0 |

(continued)

|   | red | blue | yellow | White |
|---|-----|------|--------|-------|
| p | $2 \times \ln(50/30)$ | 0 | 0 | $1 \times \ln(50/13)$ |

If the function of the cosine (or distance) between these vectors d and p can be acquired, the similarity (or non-similarity) between the document vectors d and p can be obtained. Incidentally, greater the value of the cosine (similarity) between the vectors means that the degree of similarity is high, and lower the value of the distance (non-similarity) between vectors means that the degree of similarity is high. The obtained similarity is stored in the processing result storage unit 320 and also sent to the similar documents S selection unit 160.

Next, the similar documents S selection unit 160 rearranges the documents, whose similarities were calculated at step S150, in the order of similarity, and selects a certain number of similar documents S, with such a number being specified in the conditions that have been set via extracting condition and other information input unit 230 (step S160).

Next, at step S170, the index term (S) extraction unit 170, which is for the similar documents S, extracts the index terms (S) from the similar documents S selected at step S160 (S170).

Next, the GFIDF(S) and others calculation unit 171 calculates the GFIDF and others of each index term (d) in the similar documents S (step S171).

Meanwhile, the GFIDF(P) and others calculation unit 143 calculates the GFIDF and others of each index term (d) in the documents-to-be-compared P (step S143).

Next, at step S180, the characteristic index terms are extracted based on the calculation results of the GFIDF (S) at step S171 and of the GFIDF(P) at step S143.

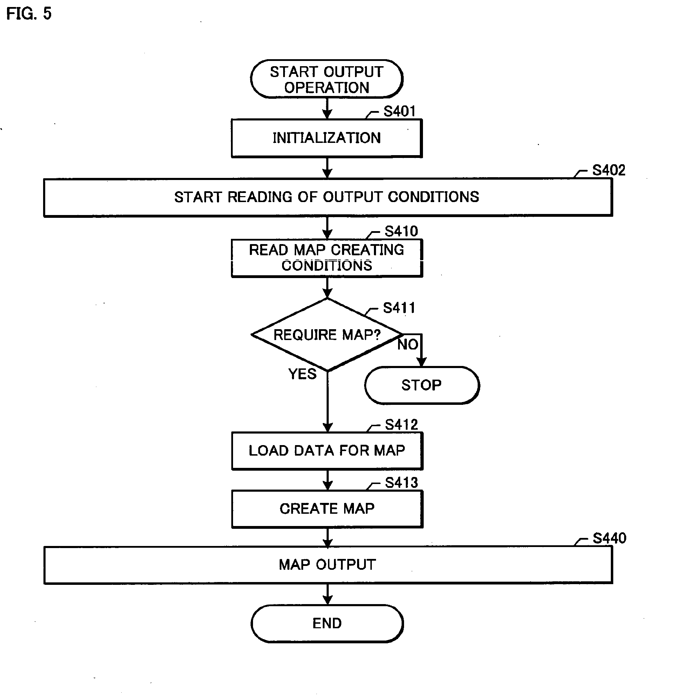

<3-3. Output Operation: FIG. 5>

FIG. 5 is a flowchart showing the output operation of the map in the output device 4. Foremost after initialization (step S401), the reading of conditions from the condition recording unit 310 is commenced for each of a map creating condition (step S402).

When the map creating condition reading unit 410 of the output device reads the map creating condition from the condition recording unit 310 (step S410), if it is a condition requiring a map (step S411), map data is loaded from the processing result storage unit 320 to the map data loading unit 412 (step S412). Next, a map is created along the map creating condition of the map creating condition reading unit 410 (step S413), and this is sent to the map output unit 440.

If the condition does not require displaying a map at step S411, the routine ends at such time, and data is not sent to the map output unit 440.

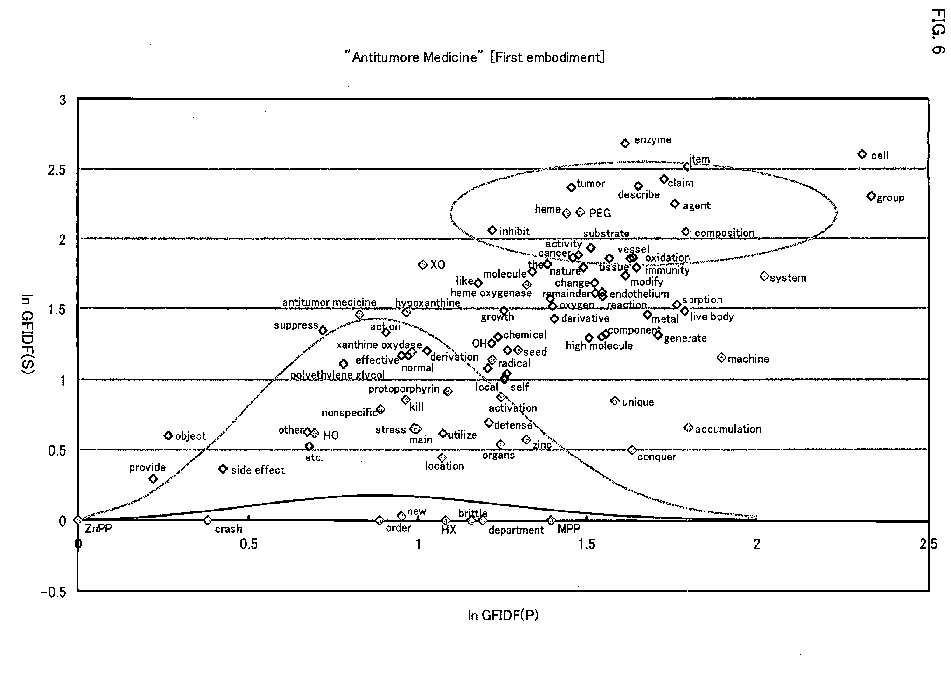

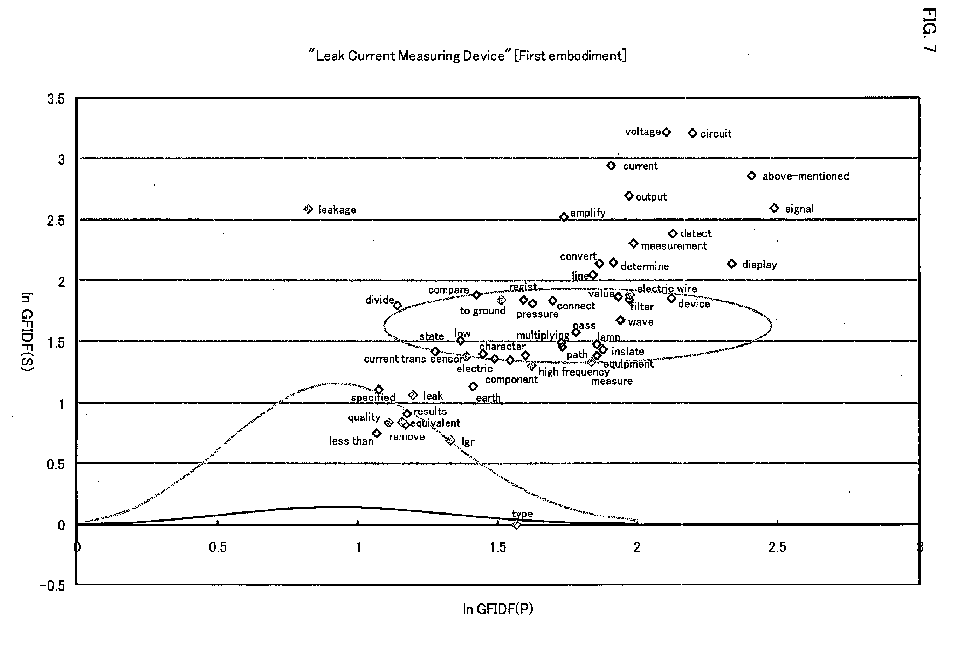

<4. First Embodiment: FIGS. 6 and 7>

<4-1. Distribution Characteristics>

FIGS. 6 and 7 shows examples of maps output by the index term extraction device according to a first embodiment. According to the first embodiment, ln GFIDF(P) is plotted on its X-axis and ln GFIDF(S) is plotted on its Y-axis. In FIG. 6, two unexamined patent publications that relate to "antitumor medicine" are used together as the documents-to-be-surveyed d. In FIG. 7, an unexamined patent publication that relates to "leak current measuring device" is used as the document-to-be-surveyed d. On these maps, the map output unit 440 outputs only the terms (characteristic index terms) that the characteristic index term extraction unit 180 extracted from the index terms (d) of the document(s)-to-be-surveyed d.

In FIGS. 6 and 7, the index terms with higher X values have higher average usage frequencies in the documents-to-be-compared P, and those with lower X values have lower average usage frequencies in the documents-to-be-compared P. The same scheme as X-axis applies to the Y values, except they correspond to the average usage frequencies in the similar documents S. A proportional relationship of X = Y is established for the index terms that are not dependent on the number of similar documents S selected from the documents-to-be-compared P and are used uniformly; however, because some noise does exist in reality, the actual distribution would be in a form that spurts from the point of origin toward upright.

A technical document such as a patent document, for example, describes some problems in need of solutions and specific structures to solve such problems. It is fairly rare that the problems are described repeatedly in a single document. On the contrary; since the structures are described in details as a result of considerations from various perspectives, same terms relating to the structures are often used repeatedly in a single document.

Therefore, it can be assumed that the index terms with higher GFIDF(P) and GFIDF(S) are those representing the specific structures described in the document, and the index terms with lower GFIDF(P) and GFIDF(S) are those representing the problems to be solved described in the document.
Especially, since a GFIDF(S) represents an index term used in the similar documents S, those terms with high GFIDF (S) can be regarded highly in making such an assumption. On the contrary, a term with a high GFIDF(P) and low GFIDF (S) deviates greatly from the proportional relationship of X = Y, and thus, can be considered to be a noise. The term used only one time per document in the similar documents S (Y = 0) often represent an original perspective.
Based on the above, the word "cloud" temporarily denotes to the area with high GFIDF(P) and GFIDF(S) located at the upper right of the map, and the word "mountain" denotes to the area with low GFIDF(P) and GFIDF(S) located at the lower left of the map. The area at the proximity of Y = 0 within the "mountain" area is temporarily denoted as "magma", by way of analogy, to indicate the lower portion of a volcano.
In this manner, the map can be interpreted as the "mountain", including the "magma" corresponding to original perspectives, imply object, and the volcano blows up, scattering fumes to create the "cloud" that imply structures. The exact area with GFIDF(P) and GFIDF(S) that are not either high or low are excluded from either the "mountain" or "cloud", and can be interpreted as noise.

<4-2. Drawing Method>

One of the drawing methods for "cloud", "mountain" and "magma" suited for patent documents is described below.
First of all, a set of index terms W that characterize the shape of the cloud are prepared from the index terms $w_i \in d$ included in the document-to-be-surveyed d. That is;
W = (claim, characterize, means, method, said, describe, device, comprise, agent, mentioned, above-mentioned} $\cap$ $\{w_i \in d\}$,
where "mentioned" exist, "above-mentioned" is not counted.
Also, separate term sets W may be defined based on the type of publications (differentiation between unexamined patent publications and registered patent publications) or IPC.
The calculations of maximum, minimum and average with variance range of W are herein denoted as $Max_w$, $Min_w$ and $<>_w$, respectively. $Max_w'$ herein denotes to an operation to calculate $Max_w$ if the term "said" exists, and, if the term "said" does not exist, to obtain the maximum value out of all the index term included in the document-to-be-surveyed d.
Using distribution parameters obtained by these operations, parameters for drawing curves corresponding to the above "mountain" and "magma" (represented by a Gaussian curves) and the "cloud" (represented by an ellipse) are specified. Universal formulas for calculating a Gaussian curve and an ellipse are as indicated below:

$$\text{Gaussian Curve: } f(X) = h \, Exp[-\pi\{(X - X_0)/\sigma\}^2]$$

$$\text{Ellipse: } \{(X - \mu)/r_1\}^2 + \{(Y - \nu)/r_2\}^2 = 1$$

The "mountain" and "magma" are expressed as X*f(X). The parameters are;
Height of the "mountain" h = $Min_w$ ln GFIDF $(W_i; S)$,
where, the height of the "magma" is defined as h/8.
Width $\Delta = 2 \times 0.6745\sigma = Min_w$ ln GFIDF $(w_i; P)$

$$\text{Center Value } X_0 = \Delta/2.$$

The "cloud" is expressed as an ellipse indicated above. The parameters are;

$$\text{Center } (\mu, \nu) = (<X>_w, <Y>_w)$$

$$\text{Radius in X-axis direction: } r_1 = (Max_w' \ X - Min_w \ X)\rho/2$$

$$\text{Radius in Y-axis direction: } r_2 = (Max_w \ Y - Min_w \ Y)\rho/2,$$

where the magnification ratio $\rho$ is expressed as;

$$\rho = 1 + 1/g.$$

$g$ is a number obtained using the number of types $k$ existing in the terms W in the document-to-be-surveyed d, and expressed as;

$$g = Max \ (Min \ (k, \ b), \ a)$$

where

$$k = \Sigma_w \ \Theta(TF(d))$$

In other words, if the number of the types $k$ is smaller than $a$, it is replaced by $a$, and if it is larger than $b$, then it is replaced by $b$. For example, if $a = 3$ and $b = 10$, then $\rho$ will be a value between the interval [1.10, 1.333]. If $a = b = 10$, then always $\rho = 1.10$. $\Theta(A)$ is a function that returns 1 if $A$ is positive, and 0 if $A$ is a value other than positives.

The reason why $Max_w'$ is not used for the radius in Y-axis direction is that more significance is placed on the horizontal axis, rather than the vertical axis, in obtaining the variation.

<4-3. Analysis Result>

The documents-to-be-surveyed for FIG. 6, the two unexamined patent publications that relate to "antitumor medicine", are read through by human power in advance, and summarized as below.
Object: To provide a novel antitumor medicine that suppresses the stress-resistant effect of the tumor, with reduced side effect to internal organs.
Structure: An antitumor medicine including an agent inhibiting heme oxidase. It is chemically modified with PEG (polyethyleneglycol).
In the map shown in FIG. 6, terms including "organs", "side effect", "stress", "suppress", "new", "antitumor medicine" and "provide" can be seen in the area of "mountain" suggesting the object. Therefore, the object can be inferred from these terms just by looking at the map, without reading the documents-to-be-surveyed directly.
Also in the map shown in FIG. 6, terms including "heme", "oxidation", "enzyme", "inhibit", "agent", "PEG" and "modify" can be seen in the area of "cloud" for indicating the structures. Therefore, the structures can be inferred from these terms just by looking at the map, without reading the documents-to-be-surveyed directly.
The document-to-be-surveyed for FIG. 7, an unexamined patent publication that relates to a "leak current measuring device", is read through by human power in advance, and summarized as below.
Object: To determine the quality of insulated state under a specified value.
Structure: Detect output from a low-pass filter that removes high frequency components of a multiplying circuit.
In the map shown in FIG. 7, terms including "specified", "less than", "quality" and "leak" can be seen in the area of "mountain" for indicating the object. Therefore, the object can be inferred from these terms just by looking at the map, without reading the document-to-be-surveyed directly.
Also in the map shown in FIG. 7, terms including "multiplying", "high frequency", "wave", "component", "low", "pass" and "filter" can be seen in the area of "cloud" for indicating the structures. Therefore, the structures can be inferred from these terms just by looking at the map, without reading the document-to-be-surveyed directly.
The characteristics of the document-to-be-surveyed can be better understood by observing the map according to the first embodiment along with the map proposed in an embodiment in the International Patent Application Number PCT/JP2004/015082 (especially, a map with IDF(P) plotted on the X-axis and IDF(S) plotted on the Y-axis), which is not published yet as of the priority date of this application.

Furthermore, the map according to the first embodiment allows investigation of derivative elements or applications, by understanding the structural elements or technical elements drawn from the perspectives.

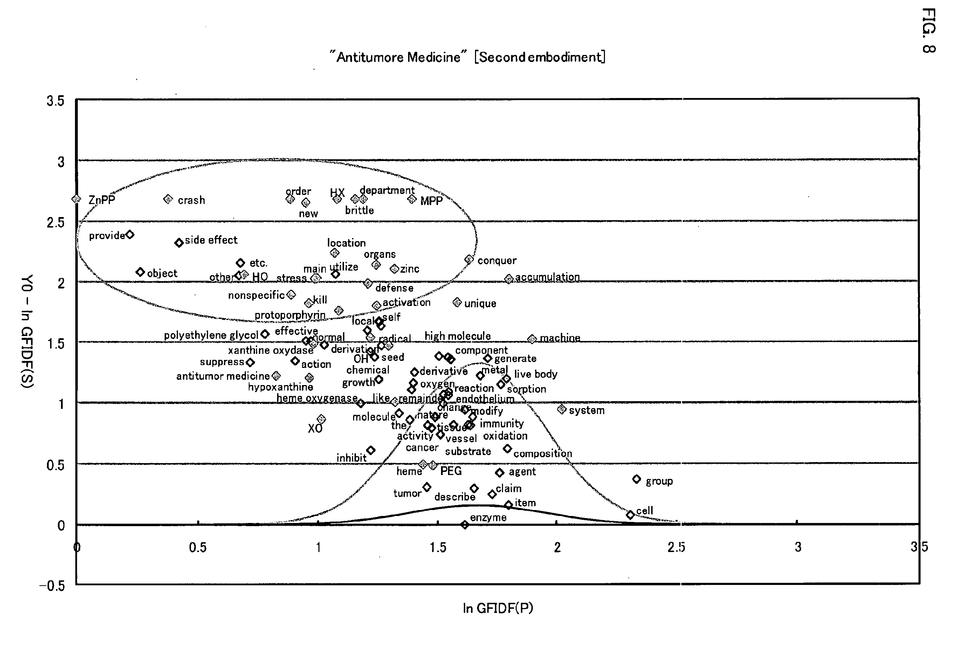

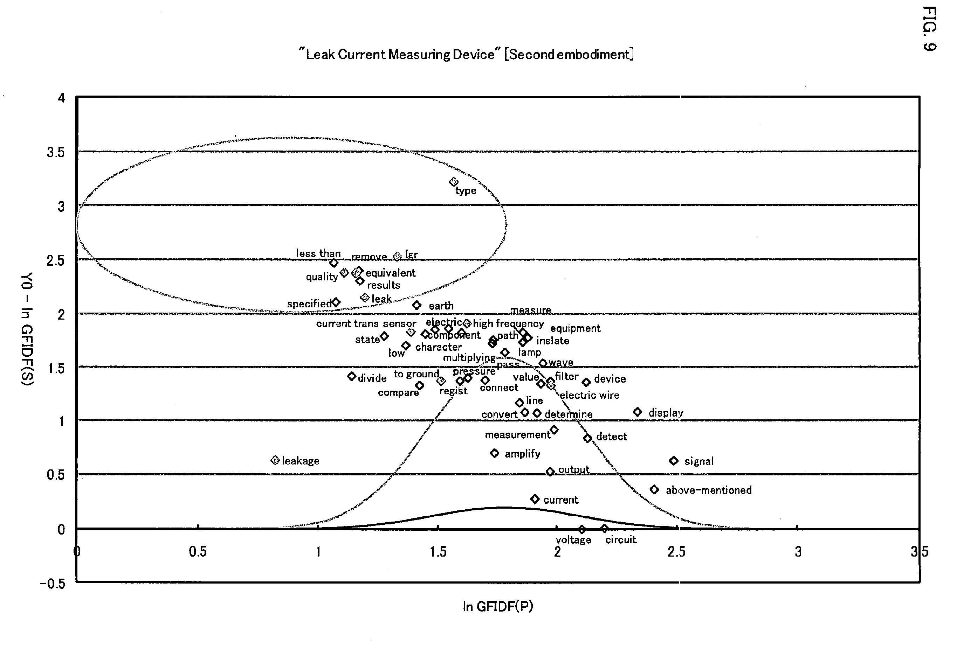

<5. Embodiment 2: FIGS. 8 and 9>

<5-1. Distribution Characteristics>

FIGS. 8 and 9 show examples of maps output from an index term extraction device according to a second embodiment. In the second embodiment, ln GFIDF(P) is plotted on the X-axis and $Y_0$ - ln GFIDF(S) is plotted on the Y-axis, where, $Y_0$ = Max ln GFIDF(S). That is, the arrangement of the index terms are reversed upside down in this map, compared to the map according to the first embodiment. Incidentally, the documents-to-be-surveyed d for FIGS. 8 and 9 are the same as those for FIGS. 6 and 7, respectively. In this map, the index terms (characteristic index terms) extracted with the index term extraction unit 180 among the index terms (d) of the document-to-be-surveyed d are output by the map output unit 440.

In FIGS. 8 and 9, the terms indicating the structures are arranged at the upper right of the map, at the proximity of the "mountain" summits, and the internal area of the "mountain" indicates broader structural concepts. Index terms with highest average frequencies in the similar documents S are arranged at the area of "magma", indicating the base concepts for the structures. At the "cloud" area, there are those terms indicating the object that is solved by the structures suggested at "mountain" area.

In other words, the second embodiment proposes a map expressing structural elements indicated at the "mountain" as a starting point and expressing what kind of concepts are thought out at the "cloud", in a form reversed from the one suggested by the first embodiment.

<5-2. Drawing Method>

An example of drawing "cloud", "mountain" and "magma" suited for analysis of patent documents is described below.

First, index terms W, $Max_w$, $Min_w$, $<>_w$ and $Max_w'$ are defined in the same manner as for the first embodiment.

The "mountain" and "magma" are expressed with a Gaussian curve f(X). The parameters are;

$$\text{Height of the "mountain" } h = (1/2)Y_0$$

Where, the height of the "magma" is defined as h/8.
width

$$\Delta = 2 \times 0.6745\ \sigma$$

$$= Max_w'\ \ln GFIDF(w_i;P) - Min_w\ \ln GFIDF(w_i;P)$$

$$\text{Center Value } X_0 = <\ln GFIDF(w_i;P)>_w$$

The "cloud" is expressed as an ellipse. The parameters are;

$$\text{Center } (\mu,\ \nu) = (X_0/2,\ (7/8)Y_0)$$

$$\text{Radius in X-axis direction: } r_1 = X_0/2$$

$$\text{Radius in Y-axis direction: } r_2 = Y_0/4$$

<5-3. Analysis Result>

In the map shown in FIG. 8, terms including "organs", "side effect", "stress", "suppress", "new", "antitumor medicine" and "provide" can be seen in the area of "cloud" suggesting the object. Therefore, the object can be inferred from these terms just by looking at the map, without reading the documents-to-be-surveyed directly.
Also in the map shown in FIG. 8, terms including "heme", "oxidation", "enzyme", "inhibit", "agent", "PEG" and "modify" can be seen in the area of "mountain" suggesting the structures. Therefore, the structures can be inferred from these terms just by looking at the map, without reading the documents-to-be-surveyed directly.
In the map shown in FIG. 9, terms including "specified", "less than", "quality" and "leak" can be seen in the area of "cloud" for indicating the object. Therefore, the object can be inferred from these terms just by looking at the map, without reading the document-to-be-surveyed directly.
Also in the map shown in FIG. 9, terms including "multiplying", "circuit", "high frequency", "wave", "component", "low", "pass", "filter", "output", "signal" and "detect" can be seen in the area of "mountain" for indicating the structures. Therefore, the structures can be inferred from these terms just by looking at the map, without reading the document-to-be-surveyed directly.
Further, the characteristics of the document-to-be-surveyed can be better understood by observing the map according to the second embodiment along with the map proposed in an embodiment in the above-mentioned International Patent Application Number PCT/JP2004/015082 (especially, a map with IDF(P) plotted on the X-axis and IDF(S) plotted on the Y-axis).
Furthermore, the map according to the second embodiment facilitates investigation of new development ideas, based on the structural elements of the existing inventions

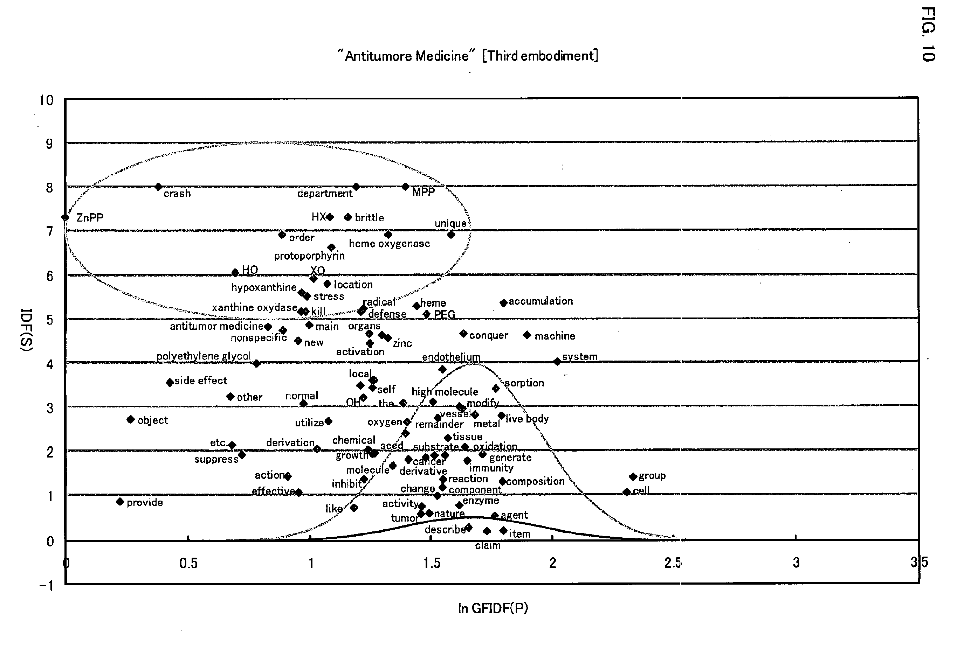

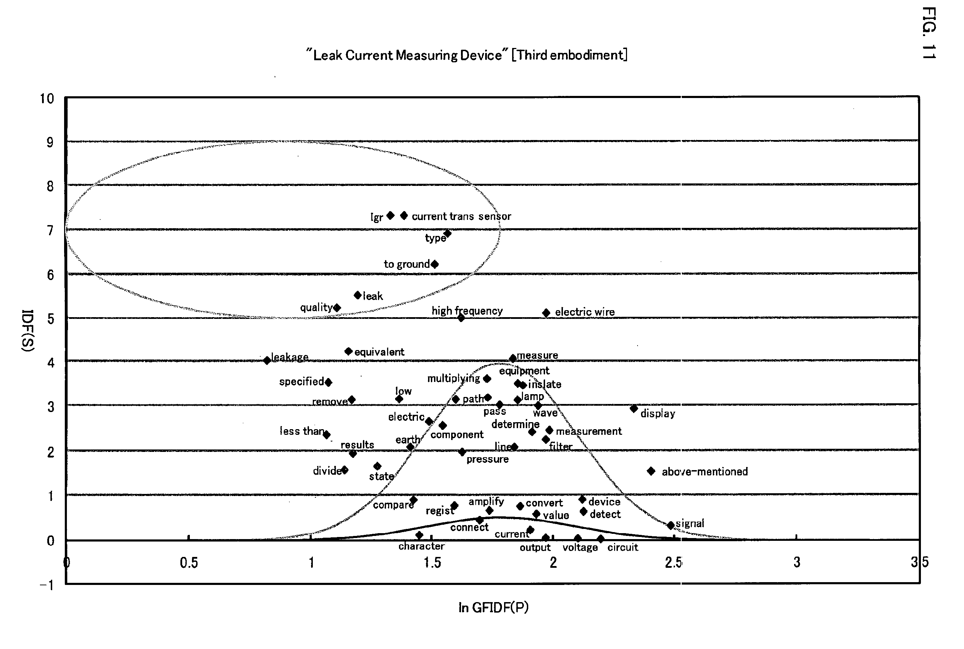

<6. Embodiment 3: FIGS. 10 and 11>

<6-1.Distribution Characteristics>

FIGS. 10 and 11 show the examples of maps output by the index term extraction device according to a third embodiment.
In the third embodiment, In GFIDF(P) is plotted on the X-axis and IDF(S) is plotted on the Y-axis. Incidentally, the documents-to-be-surveyed d for FIGS. 10 and 11 are the same as those for FIGS. 6 and 7, respectively. In this map, the index terms (characteristic index terms) extracted with the index term extraction unit 180 among the index terms (d) of the document-to-be-surveyed d are output by the map output unit 440.
Because the distributions in the maps according to the first and second embodiment have a linear trend of $Y = X$ and $Y_0 - Y = X$, respectively, if assertions can be understood by using either one of X- or Y-axis, the other remaining axis can be used for another values. IDF(S) (inverse document frequency) is an inverse power function of the number of the documents that was hit by the retrieval using the index term w in the similar documents S. The higher IDF(S) an index term has, the lower its document frequency DF in the similar documents will be, therefore, such an index term can be said to be suggesting an original concept appeared in the document-to-be-surveyed.
Because In GFIDF(P) is plotted on the X-axis and IDF(S) is plotted on Y-axis, assertions can be read from the value on the X-axis, and the originality can be read from the value on the Y-axis.
The average frequency and document frequency of an index term are not correlative per se; however, if the scope is limited to those terms whose usage is less inevitable, it can be said that a term with a low usage frequency per document also has a low document frequency. Therefore, the lower the X-axis value, the lower the document frequency will be, thus increasing the Y-axis value, resulting in a distribution similar to the index term distribution in the map according to the second embodiment.
Since those terms with high DF value will have low Y-axis values, those terms inevitably and routinely used (those having low originality) are pushed down to lower area of the "cloud", although they were arranged within the "cloud" suggesting the object in the second embodiment.
Also in the "mountain" area, those terms routinely used are brought down into the "magma" area, and in the other way around, those terms with originality will be brought up.

<6-2. Drawing Method>

If the map is used for analysis of patent documents, the same drawing method of "cloud", "mountain" and "magma" as the second embodiment may be used. However, in the third embodiment, the maximum Y-axis value used for calculating the parameters is ln [N'], rather than $Y_0$ used in the second embodiment. Here, N' denotes to the number of documents comprising the similar documents S.

<6-3. Analysis Result>

In the map shown in FIG. 10, terms including "organs", "stress", "new" and "antitumor medicine" can be seen in the area of "cloud" suggesting the object. Therefore, the object can be inferred from these terms just by looking at the map, without reading the documents-to-be-surveyed directly. However, the terms "side effect", "suppress" and "provide" are brought down to an area quite lower than the "cloud" area.
Also in the map shown in FIG. 10, terms including "oxidation", "enzyme", "inhibit", "agent" and "modify" can be seen in the area of "mountain" suggesting the structures. Therefore, the structures can be inferred from these terms just by looking at the map, without reading the documents-to-be-surveyed directly. However, the terms "heme" and "PEG" are brought up to an area quite higher than the "mountain" area.
In the map shown in FIG. 11, terms including "specified", "quality" and "leak" can be seen in the area of "cloud" for indicating the object. Therefore, the object can be inferred from these terms just by looking at the map, without reading the document-to-be-surveyed directly. However, the terms "less than" are brought down to an area quite lower than the "cloud" area.
Also in the map shown in FIG. 11, terms including "multiplying", "circuit", "high frequency", "wave", "component", "low", "pass", "filter", "output", "signals" and "detect" can be seen in the area of "mountain" suggesting the structures. Therefore, the structures can be inferred from these terms just by looking at the map, without reading the document-to-be-surveyed directly.
Further, the characteristics of the document-to-be-surveyed can be better understood by observing the map according to the third embodiment along with the map proposed in an embodiment in the above-mentioned International Patent Application Number PCT/JP2004/015082 (especially, a map with IDF(P) plotted on the X-axis and IDF(S) plotted on the Y-axis).

<6-4. Example of Variation>

When IDF(P) is plotted on X-axis and In GFIDF(S) is plotted on Y-axis, the similar tendency is observed from the mirrored image in relation to the line Y = X; therefore, it may also be used.

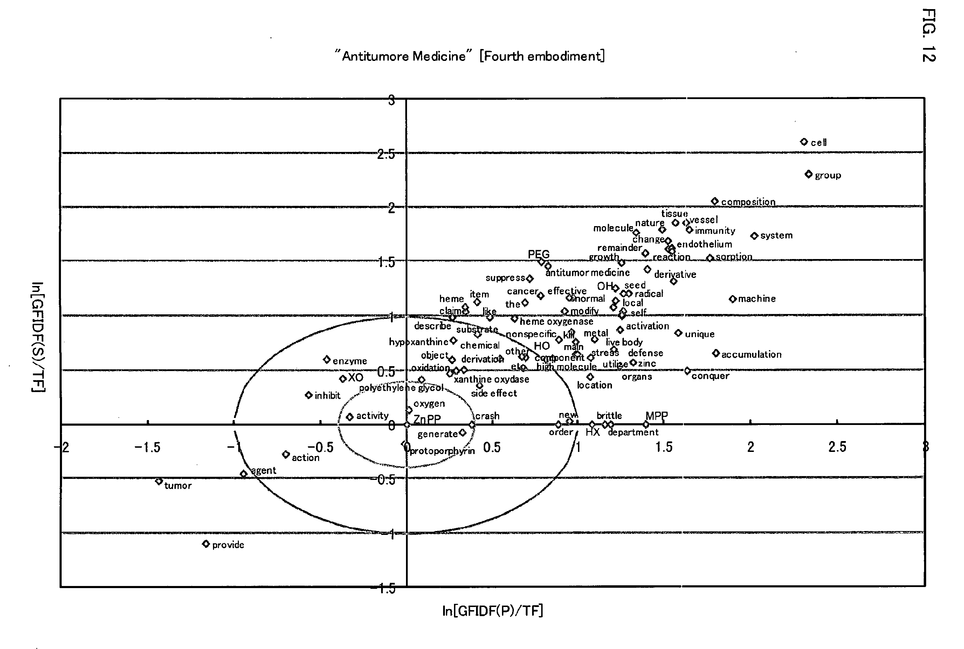

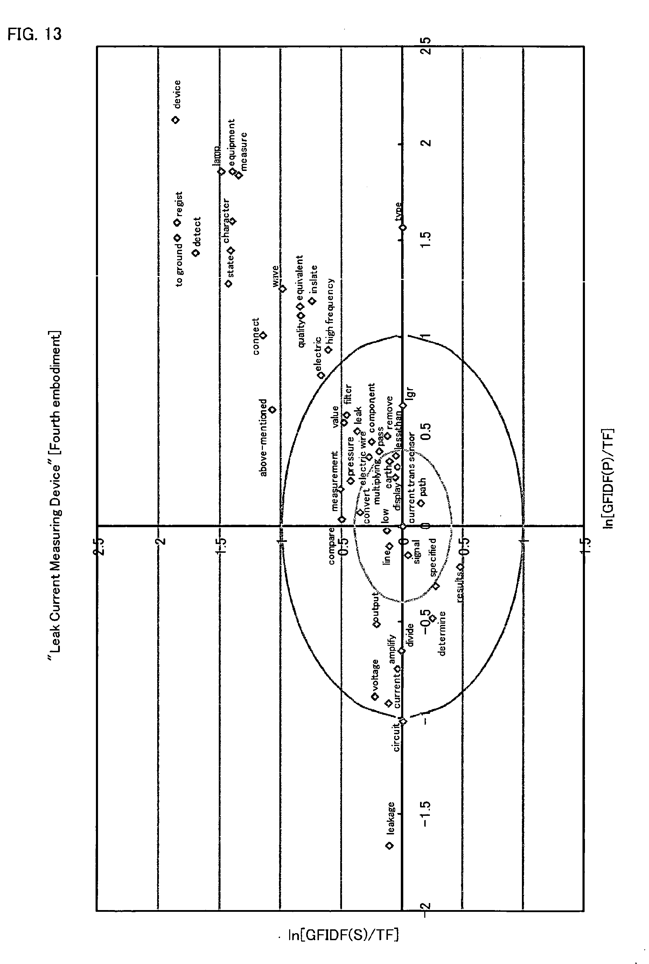

<7. Embodiment 4: FIGS. 12 and 13>

<7-1.Distribution Characteristics>

FIGS. 12 and 13 show the examples of maps output from an index term extraction device according to a fourth embodiment. In the fourth embodiment, ln {GFIDF(P) / TF(d)} is plotted on the X-axis and ln {GFIDF(S) / TF(d)} is plotted on the Y-axis. Incidentally, the documents-to-be-surveyed d for FIGS. 12 and 13 are the same as those for FIGS. 6 and 7, respectively. In this map, the index terms (characteristic index terms) extracted with the index term extraction unit 180 among the index terms (d) of the document-to-be-surveyed d are output by the map output unit 440.
In the forth embodiment, strength of assertions in the document-to-be-surveyed d itself is taken into account. That is, because GFIDF(P) or GFIDF(S) is an average term frequency in the document set P or S, if it is divided by the term frequency in the document-to-be-surveyed itself;
If GFIDF / TF(d) > 1, then the term frequency in the document-to-be-surveyed d is lower than average (Modest assertion).
If GFIDF / TF(d) = 1, then the term frequency in the document-to-be-surveyed d is the same as the average (Normal assertion).
If GFIDF/TF(d) < 1, then the term frequency in the document-to-be-surveyed d is higher than the average (Strong assertion).
The map with GFIDF(P) / TF(d) plotted on the X-axis and GFIDF(S) / TF(d) plotted on the Y-axis is not easy to review, because there is a lot more area located at upper right side of the determination boundary point (X, Y) = (1, 1). This problem can be overcome by taking logarithm of these values. That is, the determination boundary point will be set at (0, 0), and the map area with negative value is enlarged if the antilog of the logarithmic function is smaller than 1, because the logarithmic values would have steep slope.

<7-2. Drawing Method>

A large circle with radius of 1.0 and a small circle with radius of 0.4, having its center located at the point of origin, are assumed on the map, and any internal area given by the large or smaller circle is considered to suggest "normal assertions", the area at upper right than the circle suggests the "modest assertions", and the area at lower left than the circle suggests the "strong assertions". Incidentally,

$$-1.0 < \ln \{GFIDF / TF(d)\} < 1.0$$

corresponds to

$$1/3 < GFIDF / TF(d) < 2.7,$$

and

$$-0.4 < \ln \{GFIDF / TF(d)\} < 0.4$$

corresponds to

$$2/3 < GFIDF / TF(d) < 1.5.$$

The assertion of document can be better understood by observing these maps with any one of the maps of the first embodiment through the third embodiment.

<7-3. Analysis Result>

In the map of FIG. 12, terms "tumor", "agent" and "provide" can be seen in the "strong assertions" area, and terms including "effect", "oxygen", "activity", "ZnPP" and "protoporphyrin" can be seen in the "normal assertions" area. In this manner, it facilitates understanding of what is asserted in the documents-to-be-surveyed, along with the strength of the assertions.
In the map of FIG. 13, terms "circuit" and "leak" can be seen in the "strong assertions" area, and terms including "specified", "determine" and "results" can be seen in the "normal assertions" area. In this manner, it facilitates understanding of what is asserted in the document-to-be-surveyed, along with the strength of the assertions.

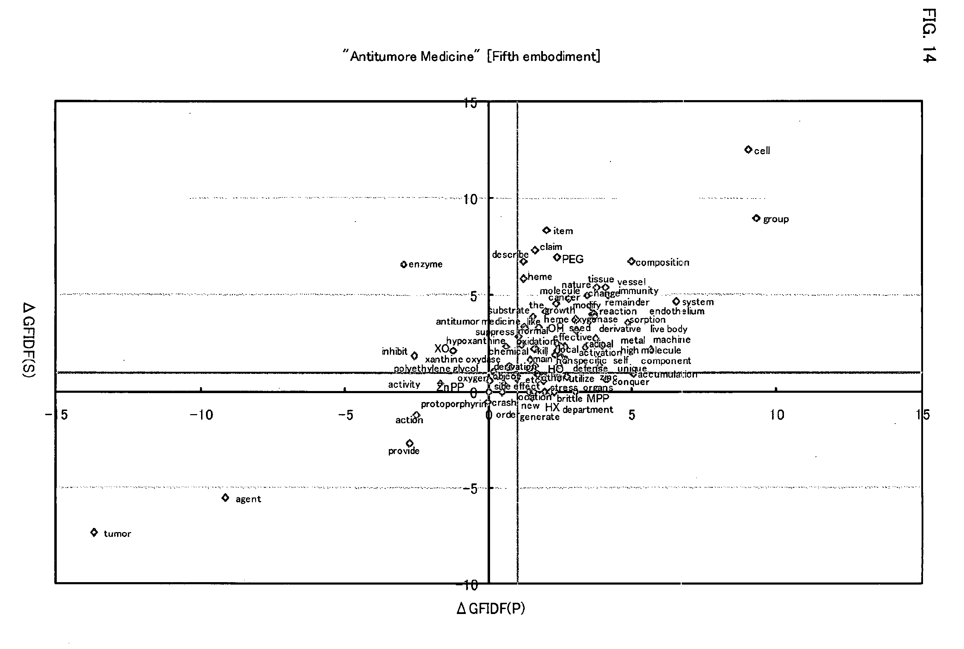

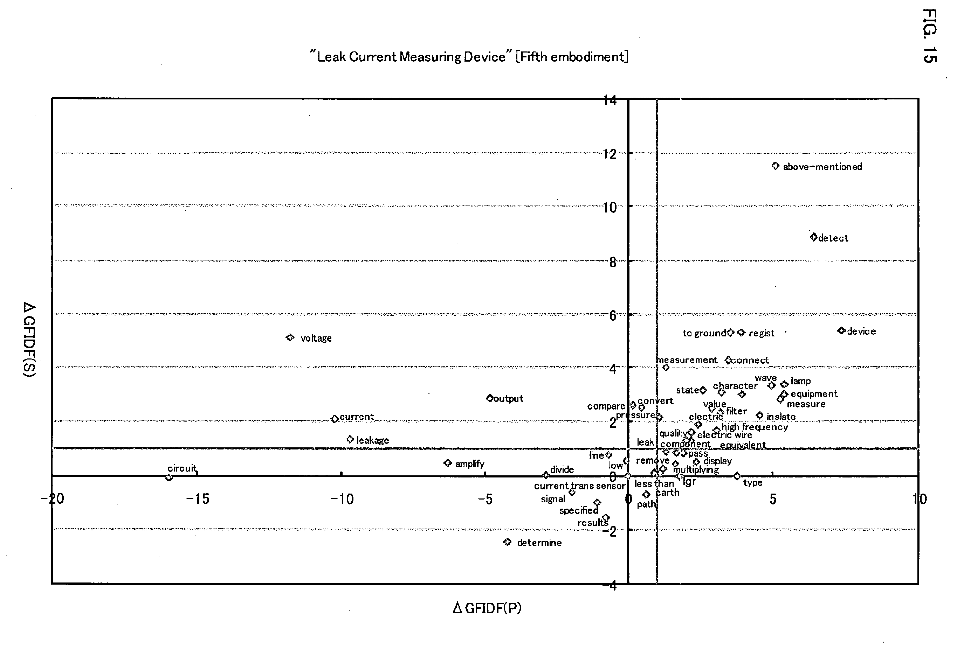

<8. Embodiment 5: FIGS. 14 and 15>

<8-1.Distribution Characteristics>

FIGS. 14 and 15 show the examples of maps output by the index term extraction device according to a fifth embodiment. In the fifth embodiment, GFIDF(P) - TF(d) is plotted on the X-axis and GFIDF(S) - TF(d) is plotted on the Y-axis. Incidentally, the documents-to-be-surveyed d for FIGS. 14 and 15 are the same as those for FIGS. 6 and 7, respectively. In this map, the index terms (characteristic index terms) extracted with the index term extraction unit 180 among the index terms (d) of the document-to-be-surveyed d are output by the map output unit 440.
In the fifth embodiment, strength of assertions in the document-to-be-surveyed d itself is taken into account, in the same manner as in the fourth embodiment. In the fifth embodiment, the difference between GFIDF and TF(d) is calculated, rather than the difference between the ln GFIDF and ln TF(d) in the fourth embodiment.

<8-2. Drawing Method>

The area located at upper right from X = 1 and Y = 1 is allocated for "modest assertions", that located at lower left is allocated for "strong assertions", and that located inside an appropriate circle having (X, Y) = (1, 1) at its center is allocated for "normal assertions".

The assertion of document can be better understood by observing these maps with any one of the maps of the first embodiment through the third embodiment.

<8-3. Analysis Result>

In the map of FIG. 14, terms "tumor", "agent", "provide" and "effect" can be seen in the "strong assertions" area, and terms including "activity", "oxygen", "crash", "ZnPP", "protoporphyrin" and "side effect" can be seen in the "normal assertions" area. In this manner, it facilitates understanding of what is asserted in the documents-to-be-surveyed, along with the strength of the assertions.

In the map of FIG. 15, terms "amplify", "circuit" and "determine" can be seen in the "strong assertions" area, and terms including "specified", "signals", "results" and "current trans sensor" can be seen in the "normal assertions" area. In this manner, it facilitates understanding the assertions of the document-to-be-surveyed, along with the strength of the assertions.

**Claims**

1.  An index term extraction device comprising:

    input means for inputting a document-to-be-surveyed, documents-to-be-compared that are compared with the document-to-be-surveyed, and similar documents that are similar to the document-to-be-surveyed;
    index term extraction means for extracting index terms from the document-to-be-surveyed;
    first appearance frequency calculation means for calculating a function value of an appearance frequency of each of the extracted index terms in the documents-to-be-compared;
    second appearance frequency calculation means for calculating a function value of an appearance frequency of each of the extracted index terms in the similar documents; and
    output means for outputting each index term and its positioning data based on the combination of the function value of the appearance frequency in the documents-to-be-compared and the function value of the appearance frequency in the similar documents, respectively calculated for each index term,
    wherein at least one of the function value of the appearance frequency in the documents-to-be-compared calculated by the first appearance frequency calculation means and the function value of the appearance frequency in the similar documents calculated by the second appearance frequency calculation means has a global frequency IDF as its variable.

2.  The index term extraction device according to claim 1, wherein the input means calculates, with respect to the document-to-be-surveyed and each document of source-documents-for-selection from which the similar documents are selected, a vector having as its component a function value of an appearance frequency in each document of each index term contained in each document, or a function value of an appearance frequency in the source-documents-for-selection of each index term contained in each document, selects the documents with a vector of a higher degree of similarity to the vector calculated for the document-to-be-surveyed from the source-documents-for-selection and inputs the selected documents as the similar documents.

3.  The index term extraction device according to claim 1 or 2, wherein the output means arranges and outputs each index term by taking the function value of the appearance frequency in the documents-to-be-compared as a first axis of a coordinate system, and taking the function value of the appearance frequency in the similar documents as a second axis of the coordinate system.

4.  The index term extraction device according to any one of claims 1 through 3, wherein both of the function value of the appearance frequency in the documents-to-be-compared calculated by the first appearance frequency calculation means and the function value of the appearance frequency in the similar documents calculated by the second appearance frequency calculation means have the global frequency IDF as a variable.

5.  The index term extraction device according to any one of claims 1 through 4, wherein the function value having a global frequency IDF as its variable is a logarithm of such global frequency IDF.

6.  The index term extraction device according to any one of claims 1 through 4, wherein the function value having a global frequency IDF as its variable is a function value having a ratio or difference between the global frequency IDF and a term frequency in the document-to-be-surveyed as a variable.

7. An index term extraction method comprising:

an input step for inputting a document-to-be-surveyed, documents-to-be-compared that are compared with the document-to-be-surveyed, and similar documents that are similar to the document-to-be-surveyed;
an index term extraction step for extracting index terms from the document-to-be-surveyed;
a first appearance frequency calculation step for calculating a function value of an appearance frequency of each of the extracted index terms in the documents-to-be-compared;
a second appearance frequency calculation step for calculating a function value of an appearance frequency of each of the extracted index terms in the similar documents; and
an output step for outputting each index term and its positioning data based on the combination of the function value of the appearance frequency in the documents-to-be-compared and the function value of the appearance frequency in the similar documents, respectively calculated for each index term,
wherein at least one of the function value of the appearance frequency in the documents-to-be-compared calculated by the first appearance frequency calculation step and the function value of the appearance frequency in the similar documents calculated by the second appearance frequency calculation step has a global frequency IDF as its variable.

8. An index term extraction program for causing a computer to execute:

an input step for inputting a document-to-be-surveyed, documents-to-be-compared that are compared with the document-to-be-surveyed, and similar documents that are similar to the document-to-be-surveyed;
an index term extraction step for extracting index terms from the document-to-be-surveyed;
a first appearance frequency calculation step for calculating a function value of an appearance frequency of each of the extracted index terms in the documents-to-be-compared;
a second appearance frequency calculation step for calculating a function value of an appearance frequency of each of the extracted index terms in the similar documents; and
an output step for outputting each index term and its positioning data based on the combination of the function value of the appearance frequency in the documents-to-be-compared and the function value of the appearance frequency in the similar documents, respectively calculated for each index term,
wherein at least one of the function value of the appearance frequency in the documents-to-be-compared calculated by the first appearance frequency calculation step and the function value of the appearance frequency in the similar documents calculated by the second appearance frequency calculation step has a global frequency IDF as its variable.

FIG. 1

```
                                   ┌─ 2
        ┌──────────────────────────┐
        │       INPUT DEVICE        │
        └──────────────────────────┘
                     │
                     ▼          ┌─ 1                        ┌─ 3
        ┌──────────────────────────┐        ┌──────────────────────────┐
        │    PROCESSING DEVICE      │───────▶│     RECORDING DEVICE      │
        │                           │◀───────│                           │
        └──────────────────────────┘        └──────────────────────────┘
                     │
                     ▼          ┌─ 4
        ┌──────────────────────────┐
        │       OUTPUT DEVICE       │
        └──────────────────────────┘
```

EP 1 876 541 A1

FIG. 2

20

FIG. 3

```
                    ┌─────────────────────┐
                    │  START CONDITION     │
                    │  INPUT OPERATION     │
                    └──────────┬──────────┘
                               │        ┌─ S201
                    ┌──────────▼──────────┐
                    │   INITIALIZATION     │
                    └──────────┬──────────┘
                               │        ┌─ S202
                       ╱───────▼───────╲
        ┌──────────────  DETERMINE INPUT  ──────────────┐
        │              ╲   CONDITIONS   ╱                │
        │               ╲──────┬──────╱                 │
        │                      │                         │
   ┌─S210│                ┌─S230│                   ┌─S220│
   ┌────▼────────┐   ┌────▼──────────┐   ┌─────────▼──────┐
   │   INPUT     │   │INPUT EXTRACTING│   │    INPUT       │
   │DOCUMENT-TO- │   │ CONDITION AND  │   │DOCUMENTS-TO-   │
   │BE-SURVEYED d│   │    OTHER       │   │BE-COMPARED P   │
   │  CONDITION  │   │  INFORMATION   │   │  CONDITION     │
   └────┬────────┘   └────┬──────────┘   └─────────┬──────┘
        │  ┌─S211          │  ┌─S231               │  ┌─S221
    ╱───▼───╲          ╱───▼───╲              ╱────▼───╲
    │CONFIRM │──NO──┐  │CONFIRM │──NO──┐      │CONFIRM │──NO──┐
    │CONDITIONS│    │  │CONDITIONS│    │      │CONDITIONS│    │
    ╲───┬───╱  ─────┘  ╲───┬───╱  ─────┘      ╲───┬───╱  ─────┘
      YES│              YES│                   YES│    ┌─S310
   ┌──────▼──────────────────────────────────────▼──────┐
   │              STORE CONDITIONS                        │
   └──────────────────────┬───────────────────────────────┘
                    ┌──────▼──────┐
                    │    END      │
                    └─────────────┘
```

FIG. 4

```
                    ┌─────────────────────────────┐
                    │  START CHARACTERISTIC INDEX  │
                    │  TERM EXTRACTING OPERATION   │
                    └─────────────────────────────┘
                                  │
                                  ▼        ┌─ S101
                    ┌─────────────────────────────┐
                    │        INITIALIZATION        │
                    └─────────────────────────────┘
                                  │
                                  ▼        ┌─ S102
                    ◇─────────────────────────────◇
        ┌───────────       DETERMINE       ───────────┐
        │       ┌─ S110    READING            ┌─ S130 │
        ▼                                             ▼
┌──────────────────┐                    ┌──────────────────┐
│ READ DOCUMENT-TO-│                    │ READ DOCUMENTS-  │
│  BE-SURVEYED d   │                    │ TO-BE-COMPARED P │
└──────────────────┘                    └──────────────────┘
        │  ┌─ S120                               │  ┌─ S140
        ▼                                        ▼
┌──────────────────┐                    ┌──────────────────┐
│     EXTRACT      │                    │     EXTRACT      │
│  INDEX TERM (d)  │                    │  INDEX TERM (P)  │
└──────────────────┘                    └──────────────────┘
        │  ┌─ S121              ┌─ S142         │  ┌─ S141
        ▼                       ▼               ▼
┌──────────────┐    ┌──────────────────┐    ┌──────────────┐
│ CALCULATE TF(d)│  │  CALCULATE IDF(P)│    │CALCULATE TF(P)│
└──────────────┘    └──────────────────┘    └──────────────┘
        │                   │  ┌─ S150             │
        └───────────┐       ▼                      │
                    ┌──────────────────┐           │
                    │    CALCULATE     │           │
                    │    SIMILARITY    │           │
                    └──────────────────┘           │
                            │  ┌─ S160              │
                    ┌──────────────────┐           │
                    │  SELECT SIMILAR  │           │
                    │   DOCUMENTS S    │           │
                    └──────────────────┘           │
                            │  ┌─ S170              │
                    ┌──────────────────┐           │
                    │     EXTRACT      │           │
                    │  INDEX TERM (S)  │           │
                    └──────────────────┘           │
                            │  ┌─ S171              ▼  ┌─ S143
                    ┌──────────────────┐    ┌──────────────────┐
                    │ CALCULATE GFIDF(S)│   │CALCULATE GFIDF(P)│
                    │   AND OTHERS     │    │   AND OTHERS     │
                    └──────────────────┘    └──────────────────┘
                            │                       │  ┌─ S180
        ┌───────────────────────────────────────────────────┐
        │       EXTRACT CHARACTERISTIC INDEX TERM             │
        └───────────────────────────────────────────────────┘
                                  │
                                  ▼
                          ┌──────────────┐
                          │     END      │
                          └──────────────┘
```

EP 1 876 541 A1

FIG. 5

```
        ┌─────────────────┐
        │  START OUTPUT    │
        │  OPERATION       │
        └────────┬────────┘
                 │  ┌─ S401
        ┌────────▼────────┐
        │  INITIALIZATION  │
        └────────┬────────┘
                 │                                    ┌─ S402
┌────────────────▼───────────────────────────────────────────┐
│      START READING OF OUTPUT CONDITIONS                      │
└────────────────┬───────────────────────────────────────────┘
                 │  ┌─ S410
        ┌────────▼────────┐
        │  READ MAP CREATING │
        │  CONDITIONS        │
        └────────┬────────┘
                 │  ┌─ S411
             ◇───▼───◇
            ╱          ╲  NO      ┌──────────┐
           ◇ REQUIRE MAP? ◇──────▶│  STOP    │
            ╲          ╱          └──────────┘
             ◇───┬───◇
              YES │
                  │  ┌─ S412
        ┌─────────▼─────────┐
        │  LOAD DATA FOR MAP │
        └─────────┬─────────┘
                  │  ┌─ S413
        ┌─────────▼─────────┐
        │    CREATE MAP      │
        └─────────┬─────────┘
                  │                                   ┌─ S440
┌─────────────────▼──────────────────────────────────────────┐
│                     MAP OUTPUT                              │
└─────────────────┬──────────────────────────────────────────┘
                  │
        ┌─────────▼─────────┐
        │       END         │
        └───────────────────┘
```

23

FIG. 6

"Antitumore Medicine" [First embodiment]

FIG. 7

"Leak Current Measuring Device" [First embodiment]

FIG. 8

"Antitumore Medicine" [Second embodiment]

ln GFIDF(P)

Y0 − ln GFIDF(S)

FIG. 9

"Leak Current Measuring Device" [Second embodiment]

FIG. 10

"Antitumore Medicine" [Third embodiment]

FIG. 11

EP 1 876 541 A1

"Leak Current Measuring Device" [Third embodiment]

FIG. 12

"Antitumore Medicine" [Fourth embodiment]

ln[GFIDF(P)/TF]

ln[GFIDF(S)/TF]

FIG. 13

"Leak Current Measuring Device" [Fourth embodiment]

ln[GFIDF(P)/TF]

ln[GFIDF(S)/TF]

FIG. 14

"Antitumore Medicine" [Fifth embodiment]

△ GFIDF(P)

△ GFIDF(S)

FIG. 15

EP 1 876 541 A1

"Leak Current Measuring Device" [Fifth embodiment]

Δ GFIDF(S)

Δ GFIDF(P)

**EP 1 876 541 A1**

## INTERNATIONAL SEARCH REPORT

| International application No. |
|---|
| PCT/JP2006/308473 |

A. CLASSIFICATION OF SUBJECT MATTER
*G06F17/30* (2006.01)

According to International Patent Classification (IPC) or to both national classification and IPC

B. FIELDS SEARCHED

Minimum documentation searched (classification system followed by classification symbols)
*G06F17/30* (2006.01)

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2004/061714 A1 (Intellectual Property Bank Corp.), 22 July, 2004 (22.07.04), Full text; all drawings & EP 1582999 A1 | 1-8 |
| A | Akiko AIZAWA, "Go to Bunsho no Kyoki ni Motozuku 'Tokuchoryo' no Teigi to Tekiyo", Information Processing Society of Japan Kenkyu Hokoku, 22 March, 2000 (22.03.00), Vol.2000, No.29, pages 25 to 32, 2000-FI-57-4, ISSN 0919-6072 | 1-8 |

| [X] Further documents are listed in the continuation of Box C. | [ ] See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 May, 2006 (22.05.06) | 06 June, 2006 (06.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

34

**INTERNATIONAL SEARCH REPORT**

| International application No. |
|---|
| PCT/JP2006/308473 |

C (Continuation).  DOCUMENTS CONSIDERED TO BE RELEVANT

| Category* | Citation of document, with indication, where appropriate, of the relevant passages | Relevant to claim No. |
|---|---|---|
| A | Kazunari ISHIDA, Toshizumi OTA, "Yogokan Kankei ni Chakumoku shita Bunshokan Kankei ni Kansuru Tokeiteki Bunseki to Bunseki Shien System no Kaihatsu", Information Processing Society of Japan Kenkyu Hokoku, Vol.99, No.57, pages 49 to 56, 99-FI-55-7, ISSN 0919-6072 | 1-8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1173415 A
- JP H11345239 A

- JP 2004015082 W